# EUROPÄISCHE PATENTSCHRIFT

(11) **EP 4 126 741 B1**
(45) Veröffentlichungstag und Bekanntmachung des Hinweises auf die Patenterteilung: **08.01.2025**
(21) Anmeldenummer: 21726621.2
(22) Anmeldetag: 12.05.2021
(51) Int. Cl.: F16G 15/08, B66C 1/66, F16G 15/00, F16G 15/12

(54) **ANSCHLAGPUNKT**
ATTACHMENT POINT
POINT DE FIXATION

(30) Priorität: 20.05.2020 DE 202020102890 U
(43) Veröffentlichungstag der Anmeldung: 08.02.2023
(73) Patentinhaber: J.D. Theile GmbH & Co. KG, 58239 Schwerte (DE)
(72) Erfinder: MÜER, Bernd, 58239 Schwerte (DE)
(74) Vertreter: Haverkamp Patentanwälte PartG mbB
(86) Internationale Anmeldenummer: PCT/EP2021/062676
(87) Internationale Veröffentlichungsnummer: WO 2021/233760

(56) Entgegenhaltungen:
- WO-A1-2014/029385
- DE-A1- 4 336 779
- DE-U1- 202005 019 357
- DE-U1- 202012 103 405
- US-B1- 10 576 868

## Beschreibung

Die Erfindung betrifft einen Anschlagpunkt zum Festlegen an einem festzulegenden oder handzuhabenden Gegenstand, umfassend ein ein Anschlussmittel aufweisendes Unterteil zum Anschließen des Anschlagpunktes an einen festzulegenden oder handzuhabenden Gegenstand mit einer Lagerbuchse und mit einer Schlüsselflächen zum Ansetzen eines Werkzeuges aufweisenden äußeren Mantelfläche sowie umfassend ein gegenüber dem Unterteil drehbares, mit einem Lagerabschnitt in die Lagerbuchse des Unterteils eingreifendes Oberteil mit einem Ösenglied.

Derartige Anschlagpunkte werden typischerweise zum Heben von Gegenständen verwendet. Angeschlossen werden die Anschlagpunkte mit ihrem Anschlussmittel, typischerweise als Schraubbolzen ausgeführt, an den zu hebenden oder festzulegenden Gegenstand. In vielen Fällen ist ein solcher Anschlagpunkt ausgelegt, damit bei Anliegen einer durch ein in die Anschlussöse eingehängtes Hebezeug sich die Anschlussöse entsprechend der darauf wirkenden Zugrichtung ausrichtet. Bei einem solchen Anschlusspunkt ist der den Ösenbogen tragende Grundkörper als Oberteil ausgebildet, das gegenüber einem das oder die Anschlussmittel tragenden Unterteil drehbar ist. Dieselben Eigenschaften werden auch bei einem Anschlagpunkt gewünscht, wenn dieser zum Verzurren eines Gegenstandes eingesetzt wird, grundsätzlich auch, wenn der Anschlagpunkt nicht als Anschlagwirbel mit einem gegenüber dem Unterteil drehbaren Oberteil ausgeführt ist.

In Abhängigkeit von den jeweiligen Gegebenheiten können auf einen solchen Anschlagpunkt die angreifenden Zugbelastungen auch aus Querrichtungen wirken. Um einem Verklanken der Anschlussöse innerhalb des Ösenbogens des Grundkörpers entgegenzuwirken, wird in DE 10 2006 052 986 B4 vorgeschlagen, den mit dem kleineren Radius ausgeführten Bogen der Anschlussöse in den Ösenbogen einzuhängen. Ein solcher Anschlagpunkt ist auch aus DE 20 2012 103 405 U1 bekannt. Aufgrund des geringeren Radius dieses Bogens kann eine Zwei-Punkt-Abstützung des Bogens innerhalb des Ösenbogens weitestgehend vermieden werden, sodass die Anschlussöse mit dem Ösenbogen entsprechend besser scharnieren kann. Zusätzlich ist bei diesem vorbekannten Anschlusspunkt vorgesehen, dass von jedem die Bögen verbindenden Schenkel ein Teilungselement in den von der Anschlussöse eingefassten Innenraum abragt. Die Teilungselemente unterteilen den Innenraum in einen Bereich, in dem der Ösenbogen angeordnet ist, und in einen weiteren Bereich, in dem ein Anschlag- oder Zurrmittel eingehängt werden kann. Die lichte Weite zwischen den Teilungselementen ist so bemessen, dass der Ösenbogen nicht hindurch passt. Dadurch ist sichergestellt, dass der Bogen mit dem geringeren Radius in seiner mit dem Ösenbogen des Grundkörpers scharnierenden Stellung verbleibt. Die Teilungselemente begrenzen die Eintauchtiefe der Anschlussöse in den Ösenbogen.

DE 43 36779 A1 offenbart einen gattungsgemäßen Anschlusspunkt, bei dem in das mit einer zylindrischen Mantelfläche ausgestattete Unterteil, welches mit einem den handzuhabenden Gegenstand durchgreifenden Spannbolzen an diesem Gegenstand befestigt werden kann, an zwei einander diametral gegenüberliegenden Seiten zwei Abflachungen als Schlüsselflächen ausgebildet sind. Ein nach dem selben Konzept ausgelegter Anschlusspunkt ist aus US 10 576 868 B1 bekannt.

Ein weiterer Anschlagpunkt ist aus DE 20 2005 019 357 U1 bekannt. Dieser Anschlagpunkt ist als Anschlagwirbel ausgebildet. Das mit einem Gewindezapfen ausgerüstete Unterteil weist ebenfalls zwei einander diametral gegenüberliegende Abflachungen als Schlüsselflächen auf.

Mitunter werden derartige Anschlagpunkte auch eingesetzt, um eine Zugkraft anzulegen, die quer zur Längserstreckung des Anschlagpunktes gerichtet ist. Um die Winkellage der Anschlussöse abschätzen bzw. erfassen zu können, sind bei dem aus DE 10 2006 052 986 B4 bzw. DE 20 2012 103 405 U1 vorbekannten Anschlusspunkt auf der Außenseite des Ösengliedes des Oberteils Markierungen angebracht. Die innenseitig von der Anschlussöse abragenden Teilungselemente stellen hierzu die komplementären Zeiger dar. Eine maximale Querkraft wird in das Oberteil des Anschlagpunktes eingeleitet, wenn diese in Querrichtung zur Längserstreckung des Anschlagpunktes anliegt, also in der sogenannten 90°-Stellung gegenüber der Längsachse des Anschlagpunktes. Dieser vorbekannte Anschlagpunkt vermag zwar bereits relativ hohen Querkräften standzuhalten. Es wäre jedoch wünschenswert, wenn die Querkraftbelastbarkeit eines solchen Anschlagpunktes verbessert werden könnte, insbesondere ohne die Dimensionierung oder Geometrie des Anschlagpunktes in Bezug auf seine Funktionsbestandteile ändern zu müssen.

Der Erfindung liegt daher die Aufgabe zugrunde, einen Anschlagpunkt der eingangs genannten Art dergestalt weiterzubilden, dass dieser dem vorstehenden Bedürfnis genügt.

Gelöst wird diese Aufgabe erfindungsgemäß durch einen eingangs genannten, gattungsgemäßen Anschlagpunkt, bei dem das Unterteil in seinem zu dem Oberteil weisenden Abschlussbereich einen gegenüber den Schlüsselflächen und gegenüber den zwei benachbarten, winklig zueinander angeordneten Schlüsselflächen miteinander verbindenden Kantenabschnitten in radialer Richtung auskragenden Ringflansch aufweist.

Bei diesem Anschlusspunkt befindet sich in dem zu dem Oberteil weisenden Abschlussbereich des Unterteils ein in radialer Richtung abragender (auskragender) Ringflansch. Dieser ist Teil des Unterteils, mithin an diesem angeformt, insbesondere einstückig mit diesem hergestellt. Durch den Ringflansch wird die geringere radiale Erstreckung des Unterteils im Bereich der Schlüsselflächen gegenüber der radialen Erstreckung in den benachbarten Kantenabschnitten, durch die zwei winklig zueinander angeordnete Schlüsselflächen miteinander verbunden sind, ausgeglichen. Damit kragt der Ringflansch in radialer Richtung gegenüber den Schlüsselflächen vor. Durch den vorzugsweise rotationssymmetrisch und damit kreisförmig in seiner Umfangsgeometrie ausgeführten Ringflansch weist das Unterteil daher im Bereich seines oberen Abschlusses ausgehend von der Mantelfläche seiner Lagerbuchse umfänglich eine gleiche radiale Erstreckung auf. Auf das Oberteil einwirkende Querkräfte werden von diesem in die Mantelfläche im Bereich des oberen Abschlusses der Lagerbuchse des Unterteils eingeleitet. Damit wirken aus einer Querbelastung des Anschlagpunktes resultierende Querkräfte vor allem im Bereich des zum Oberteil weisenden Abschlusses des Unterteils. Der auskragende Ringflansch bildet einen Verstärkungsflansch, durch den ein solcher Anschlagpunkt signifikant höheren Querlastbeanspruchungen standhält. Durch Ausbilden der Umrissgeometrie des Ringflansches mit rotationssymmetrischer Geometrie wird zudem erreicht, dass unabhängig von der Richtung eines Querkraftangriffes auf den Anschlagpunkt die Querlastbelastbarkeit gleich ist.

In einem Ausführungsbeispiel ist vorgesehen, dass das Unterteil an seinem zu dem Oberteil weisenden Abschluss durch den Ringflansch begrenzt ist und der Ringflansch zugleich die Schlüsselflächen an ihrer von dem Anschlussmittel wegweisenden Seite begrenzt.

Zugleich ist durch den Ringflansch ein wirksames Mittel bereitgestellt, um ein Abrutschen eines an den Schlüsselflächen des Unterteils angreifenden Werkzeuges zu verhindern. Der Ringflansch überkragt die Schlüsselflächen in radialer Richtung und bildet somit eine wirksame Abrutschsicherung. Ein zwei einander bezüglich der Achse des Unterteils gegenüberliegende Schlüsselflächen ergreifendes Werkzeug kann nicht in Richtung der Längsachse des Anschlagpunktes abrutschen. Zugleich ist hierdurch eine seitliche Führung für ein Spannwerkzeug wie etwa einen Maulschlüssel bereitgestellt, sodass ein angesetztes Werkzeug weitestgehend nur in einer radial abragenden Anordnung angesetzt werden kann. Dieses erhöht die Arbeitssicherheit durch die Vermeidung eines unbeabsichtigten Abrutschens des Werkzeuges von den Schlüsselflächen des Unterteils zudem eine Verletzungsgefahr.

Von Besonderheit bei diesem Anschlagpunkt ist, dass die Querkraftbelastbarkeit gegenüber vorbekannten Anschlagpunkten erhöht werden konnte, vor allem ohne die Aufbauhöhe des Unterteils und damit des gesamten Anschlagpunktes zu erhöhen oder andere Funktionsflächen, wie beispielsweise die Schlüsselflächen, umzugestalten oder mit einer anderen, insbesondere größeren Dimensionierung auslegen zu müssen. Ein solcher Anschlagpunkt braucht daher verglichen mit einem herkömmlichen Anschlagpunkt trotz erhöhter Querkraftbelastbarkeit nicht mit einem größer dimensionierten Werkzeug (Maulschlüssel) verspannt zu werden. Eingerichtet werden kann die Querkraftbelastbarkeit über den Durchmesser des Ringflansches und durch dessen Materialstärke. Für die Querkraftbelastbarkeit eines solchen Anschlusspunktes ist der Durchmesser des Ringflansches jedoch von höherer Bedeutung als die Materialstärke. Dieses erlaubt die Auslegung des Anschlagpunktes, der trotz höherer Querkraftbelastbarkeit keine größere Aufbauhöhe benötigt.

Der Ringflansch ragt auch über die zwei benachbarten, winklig zueinander angeordneten Schlüsselflächen verbindenden Kantenabschnitte in radialer Richtung ab. Durch diese Maßnahme wird die Querlastaufnahmefähigkeit des Anschlagpunktes weiter erhöht.

Der Ringflansch ist gemäß einem bevorzugten Ausführungsbeispiel gegenüber der Mantelfläche des angrenzenden Unterteils an seiner von dem Oberteil wegweisenden Seite abgestützt. Diese kann in Form von den Überkrag abstützenden und zur benachbarten Mantelfläche des Unterteils verlaufenden Stegen oder auch durch eine mit Radius ausgeführte Kehle bereitgestellt sein. Auch ein konischer Übergang der zu den Schlüsselflächen weisenden Unterseite des Ringflansches in die benachbarten Schlüsselflächen ist möglich.

Das Unterteil trägt gemäß einer Ausgestaltung eines solchen Anschlagpunktes an seiner dem Ringflansch gegenüberliegenden Seite einen Anlageflansch, mit dessen Unterseite der Anschlagpunkt an der Oberfläche des festzulegenden und/oder handzuhabenden Gegenstandes verspannt wird. Der Durchmesser des Anlageflansches und des Ringflansches sind gemäß einem Ausführungsbeispiel gleich. Es ist durchaus möglich, den Ringflansch auch mit einem etwas größeren Durchmesser zu konzipieren als den Anlageflansch oder umgekehrt. Bei der Konzeption eines solchen Anschlagpunktes wird man in aller Regel bestrebt sein, dass der Ringflansch und der Anlageflansch nicht zu weit von der Mantelfläche abstehen. Um die notwendige Stabilität der Flansche bei gleichem Durchmesser einstellen zu können, kann dieses über deren Materialstärke erfolgen. So ist in einem Ausführungsbeispiel vorgesehen, dass die Materialstärke des Anlageflansches etwas größer ist als die Materialstärke des Ringflansches.

Die Querkraftbelastbarkeit eines solchen Anschlusspunktes gegenüber herkömmlichen Anschlusspunkten kann, je nach Ausgestaltung um mehr als 10 % gesteigert werden. Dieses ist als signifikante Steigerung anzusehen. Während beispielsweise ein herkömmlicher Anschlagpunkt eine Querkraftbelastbarkeit von 12 bis 12,5 t hat, wurden bei gleicher Dimensionierung des Anschlagpunktes bei dem erfindungsgemäßen Anschlagpunkt Querkraftbelastungen von 14 t festgestellt. Mit einem Flansch mit einem etwas größeren Durchmesser als bei dem untersuchten Anschlagpunkt ist die Querkraftbelastbarkeit noch höher.

Nachfolgend ist die Erfindung anhand eines Ausführungsbeispiels unter Bezugnahme auf die beigefügten Figuren beschrieben:

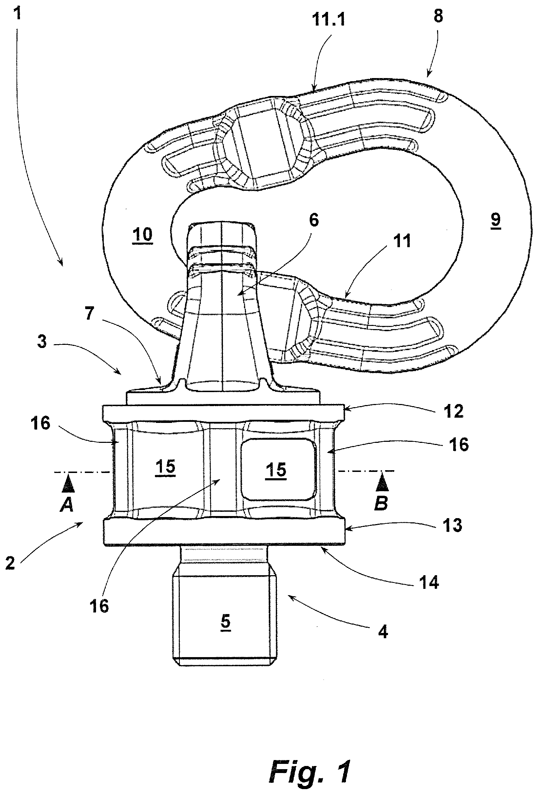

- **Fig. 1:**: eine Seitenansicht eines erfindungsgemäßen Anschlagpunktes,
- **Fig. 2:**: einen Querschnitt durch den Anschlagpunkt der Figur 1 entlang der Linie A-B und
- **Fig. 3:**: ein weiterer erfindungsgemäßer Anschlagpunkt in einem Querschnitt entsprechend demjenigen der Figur 2 mit einem zum Verspannen desselben mit einem handzuhabenden Gegenstand angesetzten Maulschlüssel.

Ein Anschlagpunkt 1 dient zum Anschluss an einen Gegenstand, damit dieser gehandhabt werden kann, das heißt: Je nach Anwendung angehoben, festgezurrt oder dergleichen. Der Anschlagpunkt 1 verfügt über ein Unterteil 2 und ein Oberteil 3. Das Oberteil 3 ist gegenüber dem Unterteil 2 drehbar gelagert. An das Unterteil ist ein Schraubbolzen 4 angeschlossen, dessen Gewindeabschnitt 5 zum Anschließen des Anschlagpunktes 1 an einen handzuhabenden Gegenstand dient, indem dieser in eine entsprechend vorbereitete Innengewindebohrung des Gegenstandes eingeschraubt wird. Das Oberteil 3 trägt ein Ösenglied 6, der zusammen mit einem Teil des Grundkörpers 7 des Oberteils 3 eine Öse bildet. In das Ösenglied 6 ist eine Anschlussöse 8 eingehängt. Die Anschlussöse 8 dient dem Zweck, daran ein Hebe- oder Zurrmittel, wie beispielsweise ein Kranhaken, ein Seil, ein Gurt oder dergleichen anzuschließen. Die Anschlussöse 8 ist asymmetrisch bezüglich ihrer Längserstreckung ausgeführt und verfügt über einen ersten Bogen 9 mit größerem Radius und einen zweiten Bogen 10 mit kleinerem Radius. Die Anschlussöse 8 ist mit ihrem Bogen 10 mit kleinerem Radius in den Ösenbogen 6 des Oberteils 3 eingehängt und kann an diesem scharnieren. Die die beiden Bögen 9, 10 verbindenden Schenkel 11, 11.1 sind bei dem dargestellten Ausführungsbeispiel gerade ausgeführt und gegeneinander geneigt, wodurch der durch die Anschlussöse 8 eingefasste Innenraum sich in Richtung zu dem Bogen 10 hin verjüngt.

Der obere Abschluss des Unterteils trägt 2 einen umlaufenden, in radialer Richtung vorspringenden und damit auskragenden Ringflansch 12. Dieser weist eine kreisrunde äußere Umrissgeometrie auf. Der Durchmesser des Ringflansches 12 entspricht bei dem dargestellten Ausführungsbeispiel dem Durchmesser des unteren Anlageflansches 13 des Unterteils 2, der mit seiner Unterseite 14 gegenüber der Oberfläche eines handzuhabenden Gegenstandes verspannt wird. Die Materialstärke des Ringflansches 12 ist bei dem dargestellten Ausführungsbeispiel etwas geringer als diejenige des Anlageflansches, beträgt etwa 80 % der Materialstärke des Anlageflansches 13. Zum Anschließen des Unterteils 2 an einem handzuhabenden Gegenstand weist dessen radial äußere Mantelfläche Schlüsselflächen 15 auf. Diese sind bei dem dargestellten Ausführungsbeispiel nach Art einer Sechskantmutter angeordnet. Der Ringflansch 12 überkragt die Schlüsselflächen 15 in radialer Richtung, sodass durch diese Maßnahme nicht nur eine wirksame Ausrisssicherung für das Oberteil 3 bereitgestellt ist, sondern zugleich eine wirksame Abrutschsicherung für ein Werkzeug, typischerweise ein Maulschlüssel, mit dem das Unterteil 2 des Anschlagpunktes 1 mit einem handzuhabenden Gegenstand verspannt wird. Bei dem dargestellten Ausführungsbeispiels ragt der Ringflansch 12 in radialer Richtung auch über die gerundet ausgeführten Kantenabschnitte 16 in radialer Richtung ab, mit denen zwei benachbarte, winklig zueinander angeordnete Schlüsselflächen 15 verbunden sind. Bei dem dargestellten Ausführungsbeispiel sind der Durchmesser des Ringflansches 12 und derjenige des Anlageflansches 13 gleich.

Das Unterteil 2 des Anschlagpunktes 1 ist als Schmiedeteil hergestellt, wobei durch den Schmiedevorgang das Unterteil 2 eines in seiner Längsrichtung unstrukturierte Mantelfläche aufweist. Die Schlüsselflächenkontur ist durch eine Fräsbearbeitung in das Unterteil eingebracht worden.

Durch den Ringflansch 12 weist das Unterteil 2 an seinem zu dem Oberteil 3 weisenden Abschluss umlaufend in radialer Richtung eine gleiche Materialstärke auf. Durch diese Maßnahme ist das Unterteil 2 durch die außenseitig angeordneten Schlüsselflächen 15 nicht geschwächt. Der Ringflansch 12 hat somit neben der Funktion der vorbeschriebenen Abrutschsicherung vor allem eine Verstärkungsfunktion, durch die der Anschlagpunkt 1 einer deutlich höheren Querkraftbelastung standhält.

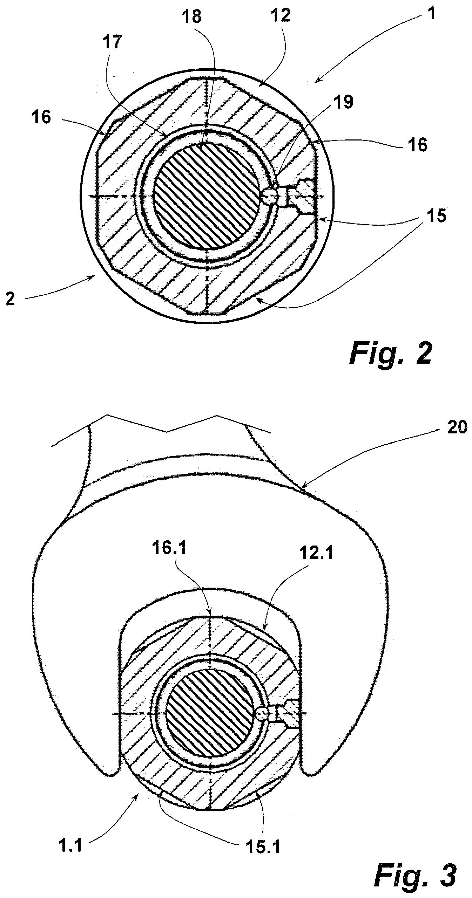

In dem in Figur 2 gezeigten Querschnitt des Anschlagpunktes 1 ist die Anschlussöse 8 nicht gezeigt. Deutlich erkennbar ist aus dieser Querschnittsdarstellung, wie der Ringflansch 12 die Schlüsselflächen 15 und bei diesem Ausführungsbeispiel auch die benachbarte Schlüsselflächen 15 verbindenden Kantenabschnitte 16 überkragt. Erkennbar ist in der Schnittdarstellung der Figur 2 zudem die Lagerbuchse 17 des Unterteils 2 sowie der darin eingreifende Lagerabschnitt 18 des Oberteils 3. Das Oberteil 3 ist gegenüber dem Unterteil 2 über ein Kugellager verbunden und auf diese Weise auch gelagert. In dieser Figur ist der Einfachheit halber nur eine der in die sich ergänzenden Kugellagernuten umlaufend angeordneten Kugeln 19 gezeigt.

Diese Schnittdarstellung verdeutlicht, dass ein an den Anschlagpunkt 1 angesetztes Werkzeug in axialer Richtung von den Schlüsselflächen 15 nicht abrutschen kann.

Verdeutlicht ist das vorstehend Beschriebene durch die Darstellung eines weiteren Anschlagpunktes 1.1 der Figur 3. Der Anschlagpunkt 1.1 entspricht dem Anschlagpunkt 1 der vorstehenden Figuren und unterscheidet sich von diesem lediglich im Hinblick auf die radiale Erstreckung seines Ringflansches 12.1. Bei diesem Ausführungsbeispiel entspricht der Durchmesser des Ringflansches 12.1 dem Durchmesser des Unterteils 2 des Anschlagpunktes 1 im Bereich der zwei benachbarte Schlüsselflächen 15.1 miteinander verbindenden Kantenabschnitte 16.1. Auch bei dem Anschlagpunkt 1.1 kommt dem Ringflansch 12.1 eine wirksame Abrutschsicherung gegenüber einem an seine Schlüsselflächen 15.1 angesetzten Maulschlüssel 20 ebenso zu wie die zu dem Anschlagpunkt 1 beschriebene Verstärkungsfunktion.

Die Erfindung ist anhand von Ausführungsbeispielen beschrieben. Ohne den Umfang der geltenden Ansprüche zu verlassen, ergeben sich für einen Fachmann zahlreiche weitere Möglichkeiten, diese umzusetzen, ohne dass dieses im Rahmen dieser Ausführungen im Einzelnen dargelegt werden müsste.

### Bezugszeichenliste

- 1, 1.1: Anschlagpunkt
- 2: Unterteil
- 3: Oberteil
- 4: Schraubbolzen
- 5: Gewindeabschnitt
- 6: Ösenglied
- 7: Grundkörper
- 8: Anschlussöse
- 9: Bogen
- 10: Bogen
- 11, 11.1: Schenkel
- 12, 12.1: Ringflansch
- 13: Anlageflansch
- 14: Unterseite
- 15, 15.1: Schlüsselfläche
- 16, 16.1: Kantenabschnitt
- 17: Lagerbuchse
- 18: Lagerabschnitt
- 19: Kugel
- 20: Maulschlüssel

## Patentansprüche

1. Anschlagpunkt zum Festlegen an einem festzulegenden oder handzuhabenden Gegenstand, umfassend ein ein Anschlussmittel (5) aufweisendes Unterteil zum Anschließen des Anschlagpunktes (1, 1.1) an einen festzulegenden oder handzuhabenden Gegenstand mit einer Lagerbuchse (17) und mit einer Schlüsselflächen (15, 15.1) zum Ansetzen eines Werkzeuges aufweisenden äußeren Mantelfläche sowie umfassend ein gegenüber dem Unterteil (2) drehbares, mit einem Lagerabschnitt (18) in die Lagerbuchse (17) des Unterteils (2) eingreifendes Oberteil (3) mit einem Ösenglied (6), wobei das Unterteil (2) in seinem zu dem Oberteil (3) weisenden Abschlussbereich einen gegenüber den Schlüsselflächen (15, 15.1) in radialer Richtung auskragenden Ringflansch (12, 12.1) aufweist,
**dadurch gekennzeichnet, dass** der Ringflansch (12) auch gegenüber den zwei benachbarte, winklig zueinander angeordnete Schlüsselflächen (15) miteinander verbindenden Kantenabschnitt (16) auskragt.

2. Anschlagpunkt nach Anspruch 1 , **dadurch gekennzeichnet, dass** die Umrissgeometrie des Ringflansches (12, 12.1) rotationssymmetrisch ist.

3. Anschlagpunkt nach einem der Ansprüche 1 oder 2, **dadurch gekennzeichnet, dass** der auskragende Ringflansch (12, 12.1) in Richtung zu den Schlüsselflächen (15, 15.1) abgestützt ist.

4. Anschlagpunkt nach Anspruch 3, **dadurch gekennzeichnet, dass** die Abstützung des Ringflansches (12, 12.1) durch einen gekrümmten Übergang zwischen dem Ringflansch (12, 12.1) und den benachbarten Schlüsselflächen (15, 15.1) bereitgestellt ist.

5. Anschlagpunkt nach einem der Ansprüche 1 bis 4, **dadurch gekennzeichnet, dass** die zum Oberteil (3) weisende Seite des den Abschluss des Unterteils (2) gegenüber dem Oberteil (3) bildenden Ringflansches (12, 12.1) in seinem nicht durch das Oberteil (3) bedeckten Abschnitt eben ist.

6. Anschlagpunkt nach einem der Ansprüche 1 bis 5, **dadurch gekennzeichnet, dass** die Schlüsselflächen (15, 15.1) an ihrer von dem Ringflansch gegenüberliegenden Seite durch einen gegenüber den Schlüsselflächen (15, 15.1) in radialer Richtung auskragenden Anlageflansch (13) begrenzt sind.

7. Anschlagpunkt nach Anspruch 6, **dadurch gekennzeichnet, dass** der Anlageflansch (13) in radialer Richtung gegenüber den Schlüsselflächen (15) und gegenüber den zwei benachbarte, winklig zueinander angeordnete Schlüsselflächen verbindenden Kantenabschnitt auskragt.

8. Anschlagpunkt nach Anspruch 6 oder 7, **dadurch gekennzeichnet, dass** die Umrissgeometrie des Anschlagflansches (13) rotationssymmetrisch ist.

9. Anschlagpunkt nach einem der Ansprüche 6 bis 8, **dadurch gekennzeichnet, dass** der Durchmesser des Ringflansches (12, 12.1) dem Durchmesser des Anschlagflansches (13) entspricht.

10. Anschlagpunkt nach einem der Ansprüche 6 bis 9, **dadurch gekennzeichnet, dass** die Materialstärke des Ringflansches (12, 12.1) geringer ist als die Materialstärke des Anlageflansches (13).

## Claims

1. Attachment point for securing to an object which is to be secured or handled, comprising a lower part having a connection means (5) for connecting the attachment point (1, 1.1) to an object which is to be secured or handled, and having a bearing bush (17) and having an outer casing with spanner flats (15, 15.1) for applying a tool, as well as comprising an upper part (3), which can rotate relative to the lower part (2) and which engages into the bearing bush (17) of the lower part (2), and which has an eyelet element (6), wherein the lower part (2) has a ring flange (12, 12.1), projecting in the radial direction relative to the spanner flats surfaces (15, 15.1), in the end section (18) pointing towards the upper part (3), **characterised in that** the ring flange (12) also projects relative to the edge section (16) connecting two adjacent spanner flats (15) which are arranged at an angle to one another.

2. Attachment point according to claim 1, **characterised in that** the circumferential geometry of the ring flange (12, 12.1) is rotationally symmetrical.

3. Attachment point according to any one of claims 1 or 2, **characterised in that** the projecting ring flange (12, 12.1) is supported in the direction towards the spanner flats (15, 15.1).

4. Attachment point according to claim 3, **characterised in that** the support for the ring flange (12, 12.1) is provided by a cambered transition region between the ring flange (12, 12.1) and the adjacent spanner flats surfaces (15, 15.1).

5. Attachment point according to any one of claims 1 to 4, **characterised in that** the side facing towards the upper part (3) of the ring flange (12, 12.1) forming the termination of the lower part (2) relative to the upper part (3) is flat in its section which is not covered by the upper part (3).

6. Attachment point according to any one of claims 1 to 5, **characterised in that** the spanner flats surfaces (15, 15.1) are delimited on their side opposite the ring flange by a contact flange (13) projecting in the radial direction relative to the spanner flats surfaces (15, 15.1).

7. Attachment point according to claim 6, **characterised in that** the contact flange (13) projects in the radial direction relative to the spanner flats surfaces (15) and relative to the edge section connecting two adjacent spanner flats surfaces arranged at an angle to one another.

8. Attachment point according to claim 6 or 7, **characterised in that** the circumferential geometry of the contact flange (13) is rotationally symmetrical.

9. Attachment point according to any one of claims 6 to 8, **characterised in that** the diameter of the ring flange (12, 12.1) corresponds to the diameter of the contact flange (13).

10. Attachment point according to any one of claims 6 to 9, **characterised in that** the material thickness of the ring flange (12, 12.1) is less than the material thickness of the contact flange (13).

## Revendications

1. Point d'attache destiné à être fixé à un objet à fixer ou à manipuler, comprenant une embase présentant un moyen de raccordement (5) afin de raccorder le point d'attache (1, 1.1) à un objet à fixer ou à manipuler, comportant un coussinet (17) et une surface d'enveloppe extérieure présentant des méplats pour clé (15, 15.1) servant de prise à un outil et comportant aussi une pièce supérieure (3) avec un élément d'oeillet (6), rotative par rapport à l'embase (2), s'engageant par un tronçon de palier (18) dans le coussinet (17) de l'embase (2) ; l'embase (2) présentant dans sa zone de terminaison orientée vers la pièce supérieure (3) une bride circulaire (12, 12.1) en saillie dans le sens radial par rapport aux méplats pour clé (15, 15.1), **caractérisé en ce que** la bride circulaire (12) est également saillante par rapport au tronçon angulaire (16) reliant deux méplats pour clé (15) voisins, disposés avec un écart angulaire l'un par rapport à l'autre.

2. Point d'attache selon la revendication 1, **caractérisé en ce que** la géométrie de contour de la bride circulaire (12, 12.1) est symétrique en révolution.

3. Point d'attache selon l'une des revendications 1 ou 2, **caractérisé en ce que** la bride circulaire saillante (12, 12.1) est en appui en direction des méplats pour clé (15, 15.1).

4. Point d'attache selon la revendication 3, **caractérisé en ce que** l'appui de la bride circulaire (12, 12.1) est mis à disposition par une transition courbe entre la bride circulaire (12, 12.1) et les méplats pour clé (15, 15.1) voisins.

5. Point d'attache selon l'une des revendications 1 à 4, **caractérisé en ce que** le côté orienté vers la pièce supérieure (3) de la bride circulaire (12, 12.1) formant la terminaison de l'embase (2) par rapport à la pièce supérieure (3) est plan dans son tronçon qui n'est pas recouvert par la pièce supérieure (3).

6. Point d'attache selon l'une des revendications 1 à 5, **caractérisé en ce que** les méplats pour clé (15, 15.1) sont limités sur leur côté opposé à la bride circulaire par une bride d'appui (13) en saillie dans le sens radial par rapport aux méplats pour clé (15, 15.1).

7. Point d'attache selon la revendication 6, **caractérisé en ce que** la bride d'appui (13) est en saillie dans le sens radial par rapport aux méplats (15) pour clé et par rapport au tronçon angulaire reliant deux méplats pour clé voisins, disposés avec un écart angulaire l'un par rapport à l'autre.

8. Point d'attache selon la revendication 6 ou 7, **caractérisé en ce que** la géométrie de contour de la bride d'appui (13) est symétrique en révolution.

9. Point d'attache selon l'une des revendications 6 à 8, **caractérisé en ce que** le diamètre de la bride circulaire (12, 12.1) correspond au diamètre de la bride d'appui (13).

10. Point d'attache selon l'une des revendications 6 à 9, **caractérisé en ce que** l'épaisseur du matériau de la bride circulaire (12, 12.1) est plus faible que l'épaisseur du matériau de la bride d'appui (13).
